# EUROPEAN PATENT APPLICATION

(11) **EP 4 799 721 A1**
(43) Date of publication of application: **02.09.2026**
(21) Application number: 24884829.3
(22) Date of filing: 30.10.2024
(51) Int. Cl.: B01J 19/00, B01J 19/28, B01L 3/00

(54) **CENTRIFUGAL MULTI-STAGE REACTION DEVICE AND OPERATION METHOD THEREFOR**

(30) Priority: 30.10.2023 CN 202311422470
(71) Applicant: Zhejiang Pushkang Biotechnology Co., Ltd., Shaoxing, Zhejiang 312366 (CN)
(72) Inventor: ZHAO, Yi-Xiang, Shaoxing, Zhejiang 312366 (CN); CHEN, Yen-Hao, Shaoxing, Zhejiang 312366 (CN); YANG, Jun, Shaoxing, Zhejiang 312366 (CN); ZUO, Yang, Shaoxing, Zhejiang 312366 (CN); YU, Bo, Shaoxing, Zhejiang 312366 (CN)
(74) Representative: Loo, Chi Ching
(86) International application number: PCT/CN2024/128553
(87) International publication number: WO 2025/092829

(57) **Abstract**

A centrifugal multi-stage reaction device and an operating method thereof are provided. The centrifugal multi-stage reaction device mainly consists of a reaction chamber and an inlet flow channel. The reaction chamber comprises at least one inclined portion and at least one reagent storage area configured on the at least one inclined portion of the reaction chamber. The reagent storage area stores a reagent. In other words, the reaction chamber of the disclosed invention can independently store different lyophilized reagent spheres by configuring multiple reagent storage areas, and by controlling the centrifugal speed and direction, different stages of reactions between a sample and multiple reagents can be achieved within the same reaction chamber.

## Description

This application claims the priority of Chinese Patent Application No. 202311422470.2, filed on October 30, 2023, the entire disclosure of which is incorporated herein by reference.

### TECHNICAL FIELD

The present disclosure relates to the technical field of centrifugal microfluidics for biomedical detection, and specifically to a centrifugal multi-stage reaction device and an operating method thereof.

### BACKGROUND OF RELATED ARTS

In modern society, the fast pace of life leads to high stress or poor eating habits, increasing the likelihood of people suffering from lifestyle-related diseases and chronic illnesses. With this trend, the demand for biomedical testing for health checkups or disease diagnosis is increasing. Therefore, how to streamline the complex procedures of traditional testing and reduce the time required to process the data has clearly become a topic of concern. With the advancement and improvement of detection technology, the integration of micro-electro-mechanical systems (MEMS) and biomedical detection technology is gradually replacing traditional methods.

Microfluidics is an emerging biomedical detection technology in recent years. It mainly involves setting up microchannels on a centrifugal disk. Since the microchannels are micrometer-scale channels that belong to the laminar flow range, centrifugation can precisely control the direction and volume of the fluid. The advantages of this technology include small sample volume requirements, which save on reagent usage, and its low energy consumption and easy quantification characteristics, which reduce the power supply required for the detection processes and allow for the acquisition of large amounts of data in a short time.

The most common application of microfluidic technology is the lab-on-a-disk (LOAD) system, which refers to a technology that integrates multiple chemical and biological analysis functions onto a single disk to process very small volumes of liquids. It is also known as a Micro Total Analysis System (µTAS). Through this technology, micrometer-scale channels can be manufactured to manipulate micrometer-scale substances. The main advantages of µTAS include: (1) low cost; (2) ability to perform multiple tests in parallel; (3) reduced human error; (4) ease of use and fast analysis speed; and (5) the ability to perform tests using a small volume of test samples.

Prior art regarding microfluidic disks utilizing microfluidic technology can be found in Chinese Patent Publication NO. CN107206334B. Fig. 12 of said patent (see Fig. 11 of the disclosed invention) discloses a device with a fluid module 10 in the form of a rotating body, mainly consisting of a base 12 and a top cover 14, which is circular and has a central opening. The rotating body 10 can be applied to the rotating component 18 of the drive device 20 through the central opening using a conventional fixing mechanism 16. The rotating component 18 is supported so that it can rotate on the stationary member 22 of the drive device 20. The drive device 20 can be a conventional centrifuge with adjustable speed, or it can be a CD or DVD drive. Additionally, a control mechanism 24 may be provided and configured to control the drive device 20 so that the rotating body 10 rotates once or multiple times at different rotation frequencies. Technicians in this field mostly use the aforementioned methods to control the rotation speed and frequency of the microfluidic disk, although the microchannels configured on such disks can be modified or changed in their chamber shape or number according to usage requirements.

Despite the superior characteristics of microfluidic technology, it still faces certain challenges and needs improvement in meeting different application requirements. Existing technologies already include various µTAS designed for specific purposes, such as separating specific targets from blood samples or testing drug effects. Furthermore, there are designs that integrate multiple reagents into the same microfluidic system. Specifically, multiple storage tanks containing reagents are connected in series to the main tank through capillary tubes. While this can effectively reduce the complicated processes of injecting multiple reagents that used to be time-consuming, the system often encounters problems in practice because the flow channel design is fixed and cannot be arbitrarily changed. These problems include reagents flowing to the next reagent tank before they are completely dissolved, or the inability to freely adjust the reaction order of reagents, resulting in a lack of flexibility in use. Therefore, the aforementioned problems need further improvement and resolution.

### SUMMARY

In view of the problems faced by related technologies, the present disclosure provides a centrifugal multi-stage reaction device and operating method, mainly applied to centrifugal microfluidic technology for biomedical detection. The design of integrating multiple reagent storage areas within a single reaction chamber effectively improves the efficiency and integrity of multiple reactions, and significantly enhances the flexibility in adjusting the reagent processing sequence during the reaction.

The disclosed invention provides a centrifugal multi-stage reaction device, comprising: a reaction chamber, the reaction chamber comprising at least one inclined portion and at least one reagent storage area; and an inlet flow channel connected to the reaction chamber; wherein the at least one reagent storage area is configured on the at least one inclined portion of the reaction chamber; and the at least one reagent storage area stores a reagent.

In one preferred embodiment, when the reaction chamber includes two reagent storage areas, a first reagent storage area is configured at the bottom of the at least one inclined portion, and a second reagent storage area is configured at the other end of the at least one inclined portion.

The disclosed invention further provides an operating method for a centrifugal multi-stage reaction device, comprising the following steps: (A) providing a centrifugal multi-stage reaction device as described in the preceding paragraph; (B) centrifuging via a power module to propel a sample from an inlet flow channel into a reaction chamber; (C) after the sample enters a first reagent storage area, the sample reacts with a first reagent in the first reagent storage area; (D) the power module rapidly changing rotation direction to propel the sample to flow upward along at least one inclined portion until it enters a second reagent storage area; (E) after the sample enters the second reagent storage area, the sample reacts with a second reagent in the second reagent storage area; and (F) the power module continuing centrifugation to return the sample to the first reagent storage area.

In another embodiment, when the reaction chamber includes three reagent storage areas, a first reagent storage area is configured at the bottom of the inclined portion, a third reagent storage area is configured at the other end of the inclined portion, and a second reagent storage area is configured at the center of the inclined portion.

The disclosed invention further provides an operating method for a centrifugal multi-stage reaction device, comprising the following steps: (a) providing a centrifugal multi-stage reaction device as described in the preceding paragraph; (b) centrifuging via a power module to reach a rotation speed, propelling a sample from an inlet flow channel into a reaction chamber; (c) after the sample enters a first reagent storage area, the sample reacts with a first reagent in the first reagent storage area; (d) the power module rapidly changing rotation direction with a first acceleration to propel the sample to flow upward along at least one inclined portion until it enters a second reagent storage area; (e) after the sample enters the second reagent storage area, the sample reacts with a second reagent in the second reagent storage area; (f) the power module continuing centrifugation to return the sample to the first reagent storage area and then stopping rotation; (g) the power module rotating to reach the rotation speed and then rapidly changing rotation direction with a second acceleration to propel the sample to flow upward along the at least one inclined portion until it enters a third reagent storage area; (h) after the sample enters the third reagent storage area, the sample reacts with a third reagent in the third reagent storage area; and (i) the power module continuing centrifugation to return the sample to the first reagent storage area.

In yet another embodiment, when two inclined portions are provided, the at least one inclined portion includes a first inclined portion and a second inclined portion connected to each other at one end, and a plurality of storage areas are arranged at intervals on the two inclined portions. Additionally, the plurality of storage areas include five reagent storage areas: a first reagent storage area is configured at the bottom junction where the first inclined portion and the second inclined portion connect; a second reagent storage area is configured at the center of the first inclined portion; a third reagent storage area is configured at the center of the second inclined portion; a fourth reagent storage area is configured at the other end of the first inclined portion; and a fifth reagent storage area is configured at the other end of the second inclined portion.

In other possible embodiments, the disclosed invention further provides an operating method for a centrifugal multi-stage reaction device, comprising the following steps: (S01) providing a centrifugal multi-stage reaction device as described in the preceding paragraph; (S02) centrifuging via a power module to reach a rotation speed, propelling a sample from an inlet flow channel into a reaction chamber; (S03) after the sample enters a first reagent storage area, the sample reacts with a first reagent in the first reagent storage area; (S04) the power module rapidly changing rotation direction with a first acceleration to propel the sample to flow upward along a first inclined portion until it enters a second reagent storage area; (S05) after the sample enters the second reagent storage area, the sample reacts with a second reagent in the second reagent storage area; (S06) the power module continuing centrifugation to return the sample to the first reagent storage area and then stopping rotation; (S07) the power module rapidly changing rotation direction with a first acceleration to propel the sample to flow upward along a second inclined portion until it enters a third reagent storage area; (S08) after the sample enters the third reagent storage area, the sample reacts with a third reagent in the third reagent storage area; (S09) the power module continuing centrifugation to return the sample to the first reagent storage area and then stopping rotation; (S10) the power module rotating to reach the rotation speed and then rapidly changing rotation direction with a second acceleration to propel the sample to flow upward along the first inclined portion until it enters a fourth reagent storage area; (S11) after the sample enters the fourth reagent storage area, the sample reacts with a fourth reagent in the fourth reagent storage area; (S12) the power module continuing centrifugation to return the sample to the first reagent storage area and then stopping rotation; (S13) the power module rotating to reach the rotation speed and then rapidly changing rotation direction with a second acceleration to propel the sample to flow upward along the second inclined portion until it enters a fifth reagent storage area; (S14) after the sample enters the fifth reagent storage area, the sample reacts with a fifth reagent in the fifth reagent storage area; and (S15) the power module continuing centrifugation to return the sample to the first reagent storage area.

In other possible embodiments, the reaction sequence of other reagents after the second reagent reaction can be adjusted according to needs, as long as centrifugal balance is maintained. Users can select the reagent storage area for reaction by adjusting the rotation direction and acceleration during centrifugation. Furthermore, the number of reagent storage areas (reagents) and the number of inclined portions can also be adjusted as needed, and are not limited to the above description.

The above brief description of the disclosed invention is intended to provide a basic explanation of several aspects and technical features of the invention. The brief description is not a detailed expression of the invention, and therefore its purpose is not to specifically list the key or important elements of the invention, nor to define the scope of the invention, but merely to present several concepts of the invention in a concise manner.

### BRIEF DESCRIPTION OF THE DRAWINGS

Fig. 1 is a schematic diagram of the centrifugal multi-stage reaction device of Embodiment 1 of the disclosed invention.
Fig. 2 is a schematic diagram of the centrifugal multi-stage reaction device of Embodiment 2 of the disclosed invention.
Fig. 3 is a schematic diagram of the centrifugal multi-stage reaction device of Embodiment 3 of the disclosed invention.
Fig. 4 is a schematic diagram of the centrifugal multi-stage reaction device of Embodiment 4 of the disclosed invention.
Fig. 5 is a stepwise schematic diagram of the operating method for the device of Embodiment 1 of the disclosed invention.
Fig. 6 is a stepwise schematic diagram of the operating method for the device of Embodiment 3 of the disclosed invention.
Fig. 7 is a stepwise schematic diagram of the operating method for the device of Embodiment 4 of the disclosed invention.
Fig. 8 is a flow chart of the operating method for the device of Embodiment 1 of the disclosed invention.
Fig. 9 is a flow chart of the operating method for the device of Embodiment 3 of the disclosed invention.
Fig. 10 is a flow chart of the operating method for the device of Embodiment 4 of the disclosed invention.
Fig. 11 is a schematic diagram of a prior art microfluidic disk using microfluidic technology and its power module.

### DETAILED DESCRIPTION OF THE INVENTION

To understand the technical features and practical effects of the present disclosure and to implement them according to the specification, the following detailed description is provided with reference to the embodiments shown in the drawings.

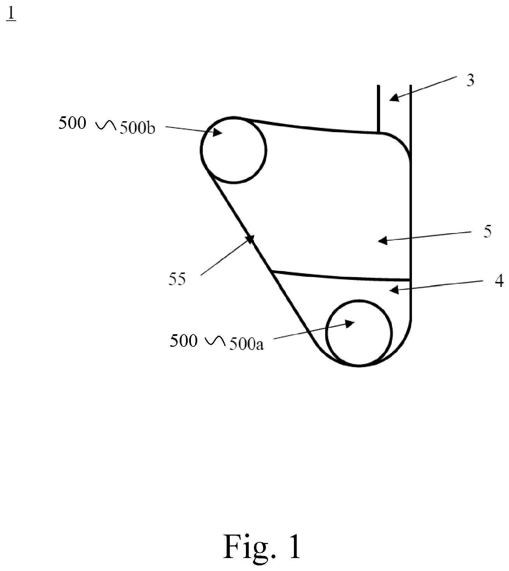

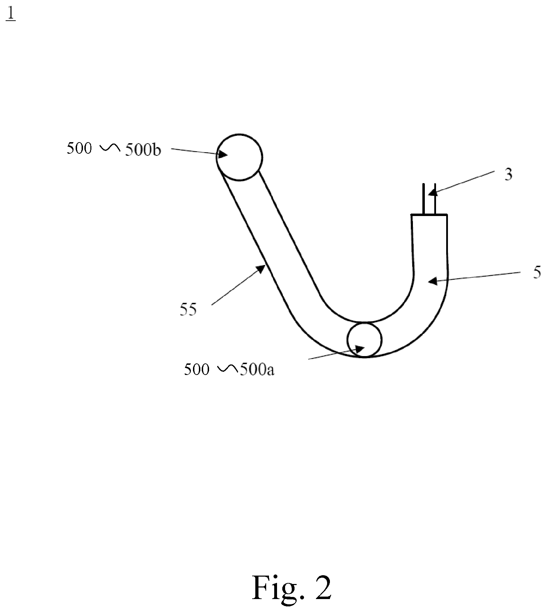

To solve the aforementioned technical problems, some embodiments of the present disclosure provide a preferred embodiment. Please refer to Fig. 1. Fig. 1 shows a centrifugal multi-stage reaction device 1, mainly comprising a reaction chamber 5 and an inlet flow channel 3 connected to the reaction chamber 5. The reaction chamber 5 further comprises an inclined portion 55 and reagent storage areas 500. The reagent storage areas 500 are configured on the inclined portion 55 of the reaction chamber 5, and each reagent storage area 500 stores a reagent 4. Further, the types of the reaction chamber 5 include a triangular chamber, an elongated channel, a U-shaped flow channel, or combinations thereof. The embodiment of the reaction chamber 5 shown in Fig. 1 is a triangular chamber; the embodiment shown in Fig. 2 is an elongated channel or a U-shaped flow channel.

Regarding the detailed internal structure of the reaction chamber 5, please refer to Fig. 1, Fig. 2, Fig. 3, and Fig. 4. Throughout Figs. 1-4, multiple reagent storage areas 500 are configured in the reaction chamber 5, and the multiple reagent storage areas 500 can be arranged at intervals on the inclined portion 55. For example, Fig. 1 shows Embodiment 1 of the disclosed invention, which is a triangular reaction chamber 5 with two reagent storage areas 500. Each of the two reagent storage areas 500 stores a reagent 4, where the first reagent storage area 500a is configured at the bottom end of the inclined portion 55. The second reagent storage area 500b is configured at the other end opposite the inclined portion 55. Additionally, the inlet flow channel 3 is connected to one short side of the triangular vessel so that the sample can flow directly into the first reagent storage area 500a at the bottom of the inclined portion 55 after entering through the inlet flow channel 3.

In Embodiment 2, as shown in Fig. 2, the reaction chamber 5 with two reagent storage areas 500 can also be a U-shaped flow channel. The first reagent storage area 500a is configured at the concave part of the U-shape, and the other second reagent storage area 500b is configured at the end of the U-shaped structure. Similar to Embodiment 1 shown in Fig. 1, the inlet flow channel 3 is connected to the other end of the U-shaped flow channel opposite to the end where the second reagent storage area 500b is configured, so that the sample can flow directly into the first reagent storage area 500a at the concave part of the U-shape after entering through the inlet flow channel 3.

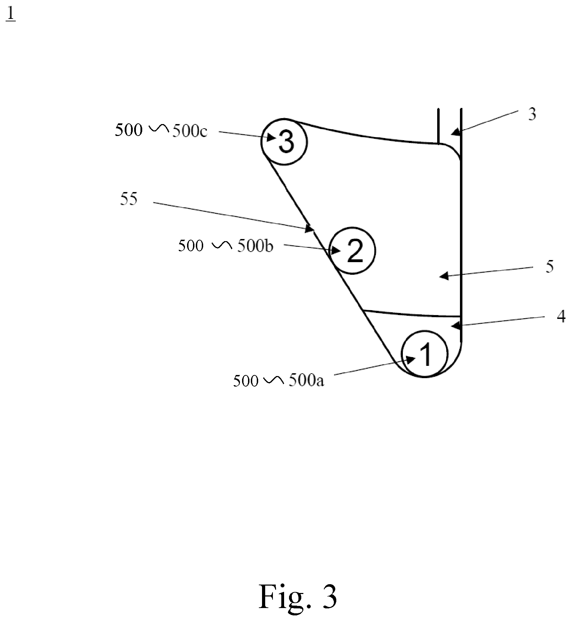

In Embodiment 3, as shown in Fig. 3, there is a triangular reaction chamber 5 with three reagent storage areas 500. The three reagent storage areas 500 are respectively configured at intervals on the inclined portion 55. The first reagent storage area 500a is configured at the bottom end of the triangle, the second reagent storage area 500b is configured at the center of the inclined portion 55, and the third reagent storage area 500c is configured at the top end of the inclined portion 55. The three reagent storage areas 500 can store three reagents 4 respectively, and the positions of the reagent storage areas 500 can be freely adjusted according to the reaction order of the sample and each reagent 4. Similar to the previous two embodiments, the inlet flow channel 3 is connected to one short side of the triangular vessel so that the sample can flow directly into the first reagent storage area 500a at the bottom of the inclined portion 55 after entering through the inlet flow channel 3.

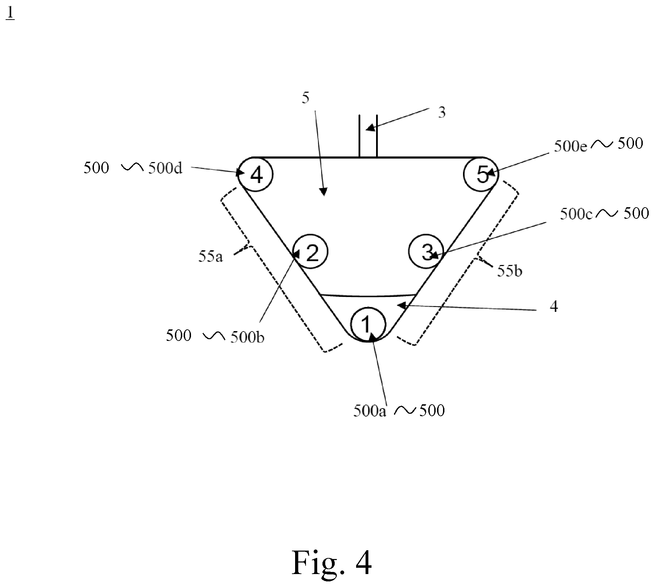

Please refer to Fig. 4 for Embodiment 4 of the disclosed invention, which is an isosceles triangular reaction chamber 5 containing five reagent storage areas 500. In Embodiment 4, the reaction chamber 5 includes two inclined portions 55 such as a first inclined portion 55a and a second inclined portion 55b connected at one end of each, which are symmetrically configured on both sides of the isosceles triangular reaction chamber 5. The five reagent storage areas 500 are configured symmetrically and at intervals in the vessel. Specifically, the five reagent storage areas 500 are arranged as follows: the first reagent storage area 500a is configured at the bottom junction where the first inclined portion 55a and the second inclined portion 55b connect (i.e., the bottom end of the isosceles triangular reaction chamber 5); the second reagent storage area 500b is configured at the center of the first inclined portion 55a; the third reagent storage area 500c is configured at the center of the second inclined portion 55b; the fourth reagent storage area 500d is configured at the other end of the first inclined portion 55a; and the fifth reagent storage area 500e is configured at the other end of the second inclined portion 55b. Also, the inlet flow channel 3 in this embodiment is configured at a position that allows the sample to flow directly into the first reagent storage area 500a after entering.

In the aforementioned embodiments, the multiple reagent storage areas 500 can store different reagents 4 respectively. The form of the reaction reagents 4 can be evaporated reagents, lyophilized reagents, lyophilized reagent spheres, or combinations thereof, as long as the preservation method does not change the enzyme activity. Specifically, evaporated reagents are solid or colloidal reagents obtained through natural evaporation. Furthermore, lyophilized reagent sphere technology can transform chemical reagents that are unstable at room temperature into a high-quality, stable, and quantitative form for long-term storage at room temperature. The freeze-dried solid spheres possess a loose network structure and reconstitute rapidly, thereby improving the stability of the reaction reagents 4 stored in the multiple reagent storage areas 500 of the centrifugal multi-stage reaction device 1 during microfluidic reactions.

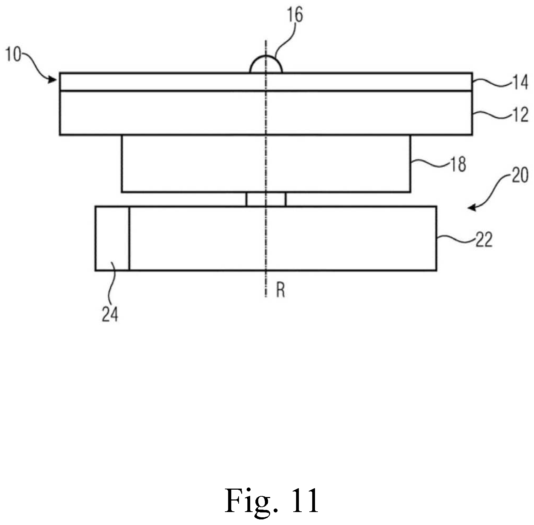

In summary, the internal designs of the reaction chamber 5 in the four embodiments of the centrifugal multi-stage reaction device 1 are all configured on the rotating body 10 as shown in Fig. 11, and the rotation frequency and direction of the power module 20' (i.e., the drive device 20 of the prior art) are adjusted via the control mechanism 24. Whether it is the number or location of the reagent storage areas 500, or the number or location of the inclined portions 55, they can be adjusted according to the reaction purpose or requirements of the sample. The configuration is not limited to these embodiments, provided that the centrifugation process can maintain the balance of the entire device and ensure smooth flow during centrifugation in different directions.

Unlike prior technologies where multiple reagent storage areas 500 are typically connected to the external vessel of the sample or reaction chamber in a fixed or serial manner-resulting in a fixed predetermined sequence and unidirectional flow, requiring reagents for each stage to be injected one by one in advance without the possibility of backflow or adjusting the order-the centrifugal multi-stage reaction device 1 of the disclosed invention improves upon these issues. It enables multiple reagents 4 to be configured simultaneously within a single reaction chamber 5, allowing the reaction order to be adjusted in a timely manner. If one reagent 4 reacts incompletely, it can be adjusted through multiple centrifugations, direction changes, or speed changes.

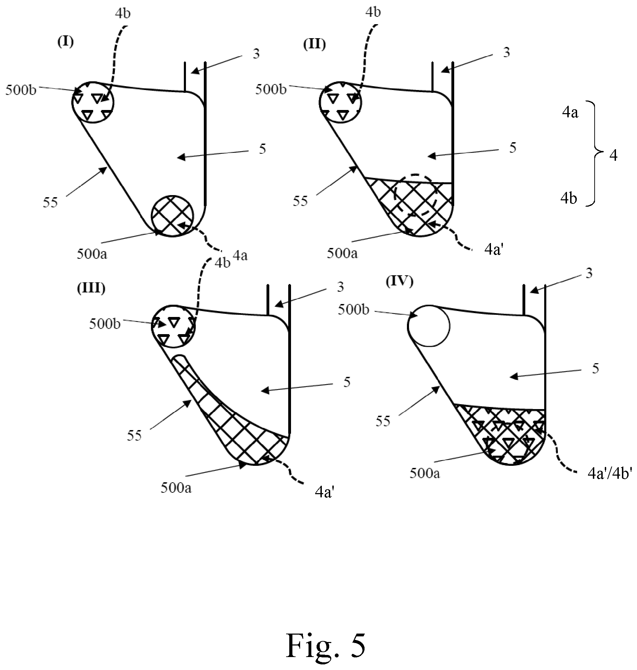

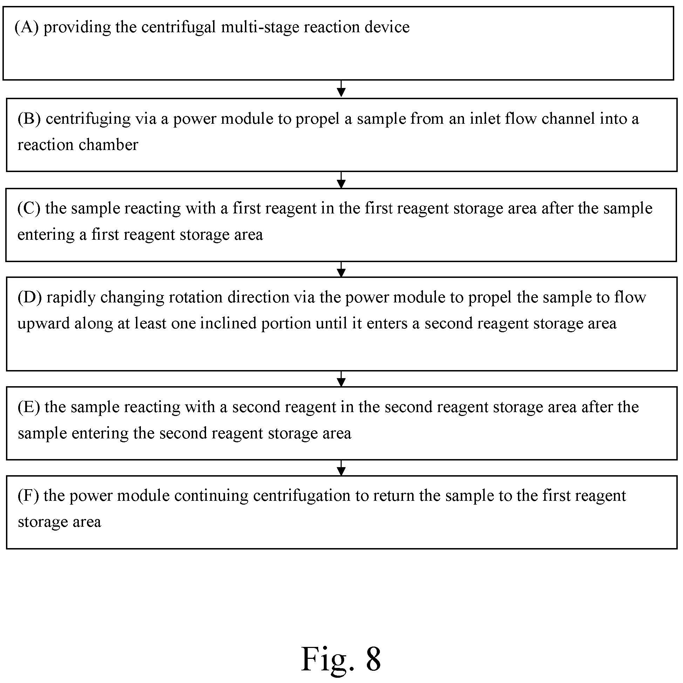

The disclosed invention further provides an operating method for the aforementioned centrifugal multi-stage reaction device 1. For a preferred embodiment, please refer to Fig. 5 and Fig. 8 simultaneously. The operating method for the centrifugal multi-stage reaction device 1 comprises the following steps.

Step (A): Providing a centrifugal multi-stage reaction device 1 as described in Embodiment 1 or Embodiment 2 (see Figs. 1, 2, and 5(I)). Step (B): The centrifugal multi-stage reaction device 1 is centrifuged via the power module 20 to propel the sample from the inlet flow channel 3 into the reaction chamber 5 (see Fig. 5(II)). In Step (B), the centrifugal speed only needs to be sufficient for the sample to flow into the reaction chamber 5. By inertia, the sample will directly flow into the first reagent storage area 500a in Step (C) and react with the first reagent 4a (see the grid pattern in Fig. 5(II)). In Step (D), the power module 20 rapidly changes the rotation direction, causing the sample to flow upward along the inclined portion 55 by Euler force until it enters the second reagent storage area 500b (see the triangular pattern in Figs. 5(III) and (IV)). According to Step (E), after the sample enters the second reagent storage area 500b, it reacts with the second reagent 4b in the second reagent storage area 500b (see Figs. 5(III) and (IV)). After the reaction, in Step (F), the power module 20 continues centrifugation to return the sample to the first reagent storage area 500a. At this step, as shown in Fig. 5(IV), the liquid at the bottom of the reaction chamber 5 is a mixture 4a'/4b' of the sample reacted with the first reagent 4a and the second reagent 4b.

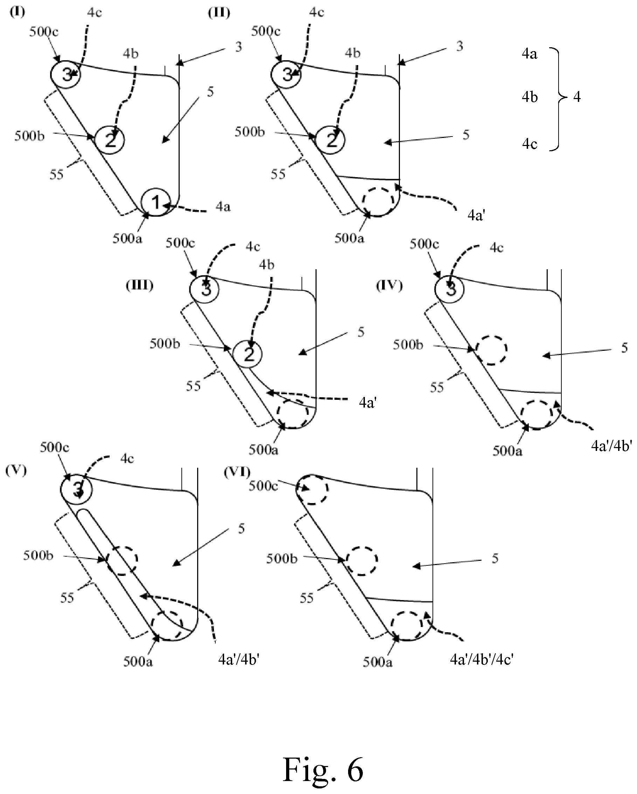

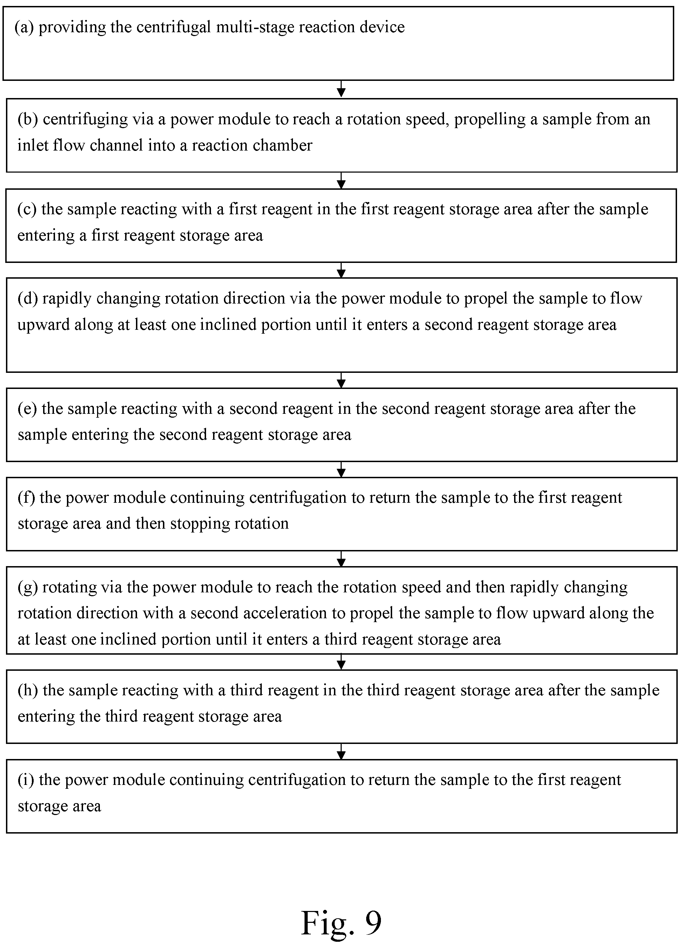

The disclosed invention further provides another operating method for the centrifugal multi-stage reaction device 1. For a preferred embodiment, please refer to Fig. 6 and Fig. 9 simultaneously. The operating method for the centrifugal multi-stage reaction device 1 comprises the following steps.

Step (a): Providing a centrifugal multi-stage reaction device 1 as described in Embodiment 3 (see Figs. 3 and 6(I)). Step (b): Centrifuging via the power module 20 to reach a rotation speed, propelling the sample from the inlet flow channel 3 into the reaction chamber 5. The rotation speed only needs to allow the sample to overcome viscosity or friction to enter the reaction chamber 5, and is not limited. Step (c): The sample flows into the reaction chamber 5 and enters the first reagent storage area 500a at the bottom of the vessel by inertia, reacting with the first reagent 4a. As shown in Fig. 6(II), the liquid at the bottom of the vessel is the mixture 4a' of the sample and the first reagent 4a.

Step (d): The power module 20 rapidly changes the rotation direction with a first acceleration, causing the sample to flow upward along the inclined portion 55 by Euler force until it enters a second reagent storage area 500b. As shown in Fig. 6(III), the liquid at the bottom of the vessel moves upward along the inclined portion 55 to the second reagent storage area 500b. Step (e): After the sample enters the second reagent storage area 500b, it reacts with the second reagent 4b in the second reagent storage area 500b. Step (f): The power module 20 continues centrifugation to return the sample to the first reagent storage area 500a and then stops rotation. As shown in Fig. 6(IV), the liquid at the bottom of the vessel is now the mixture 4a'/4b' of the sample reacted with the first reagent 4a and the second reagent 4b.

Step (g): The power module 20 rotates to the rotation speed and then rapidly changes the rotation direction with a second acceleration, causing the sample to flow upward along the inclined portion 55 by Euler force until it enters a third reagent storage area 500c. As shown in Fig. 6(V), the aforementioned mixture flows upward along the inclined portion 55 with a second acceleration greater than the first acceleration; thus, the overall path length of the fluid is greater than that shown in Fig. 6(III). Step (h): After the sample enters the third reagent storage area 500c, it reacts with the third reagent 4c in the third reagent storage area 500c. Subsequently, in Step (i), the power module 20 continues centrifugation to return the sample to the first reagent storage area 500a. As shown in Fig. 6(VI), the liquid at the bottom of the vessel is now the mixture 4a'/4b'/4c' of the sample reacted with the first reagent 4a, the second reagent 4b, and the third reagent 4c.

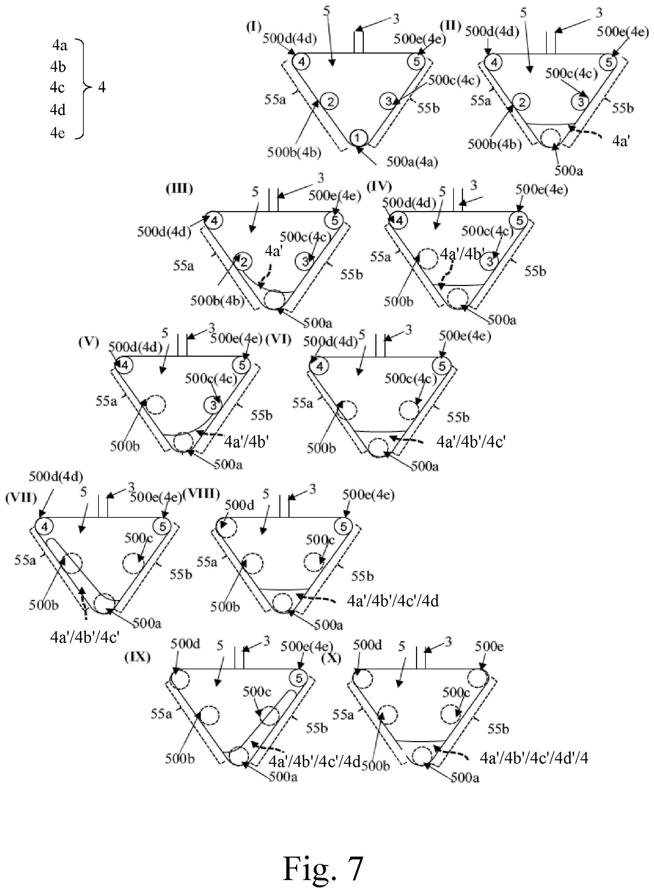

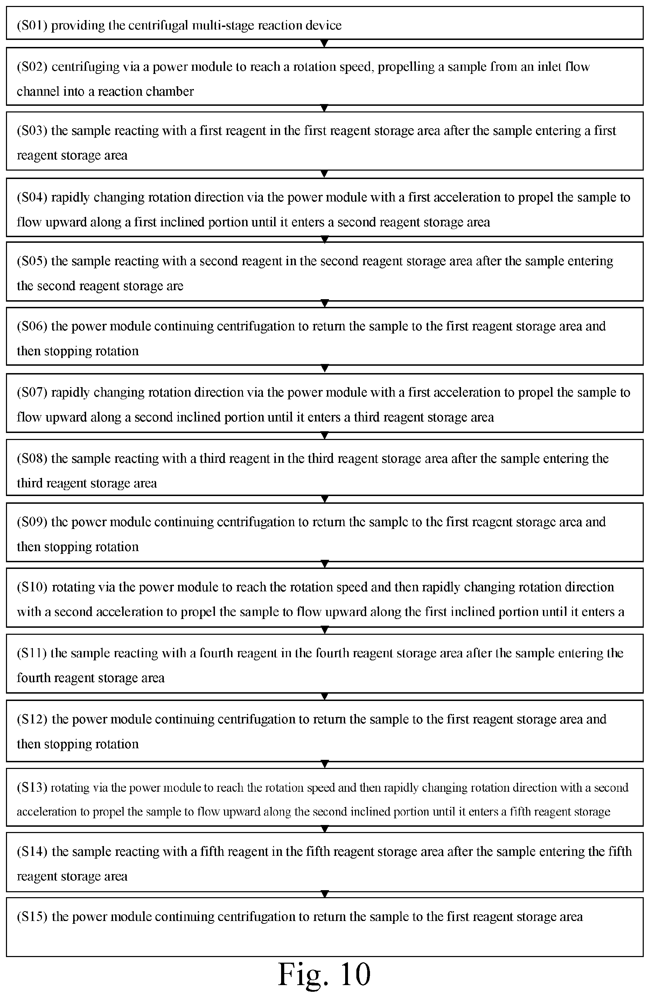

The disclosed invention further provides yet another operating method for the centrifugal multi-stage reaction device 1. For a preferred embodiment, please refer to Fig. 7 and Fig. 10 simultaneously. The operating method for the centrifugal multi-stage reaction device 1 comprises the following steps.

Step (S01): Providing a centrifugal multi-stage reaction device 1 as described in Embodiment 4 (see Figs. 4 and 7(I)). Step (S02): Centrifuging via the power module 20 to reach a rotation speed, propelling the sample from the inlet flow channel 3 into the reaction chamber 5. The rotation speed only needs to allow the sample to overcome viscosity or friction to enter the vessel. Step (S03): The sample flows into the reaction chamber 5 and enters the first reagent storage area 500a at the bottom of the vessel by inertia, reacting with the first reagent 4a. As shown in Fig. 7(II), the liquid at the bottom of the vessel is the mixture 4a' of the sample reacted with the first reagent 4a.

Step (S04): The power module 20 rapidly changes the rotation direction with a first acceleration, causing the sample to flow upward along the first inclined portion 55a by Euler force until it enters a second reagent storage area 500b. As shown in Fig. 7(III), the liquid moves upward along the first inclined portion 55a to the second reagent storage area 500b. Step (S05): After the sample enters the second reagent storage area 500b, it reacts with the second reagent 4b in the second reagent storage area 500b. Subsequently, in Step (S06), the power module 20 continues centrifugation to return the sample to the first reagent storage area 500a and then stops rotation. As shown in Fig. 7(IV), the liquid at the bottom of the vessel is the mixture 4a'/4b'.

Step (S07): The power module 20 rotates to the rotation speed described in Step (S02) and then rapidly changes the rotation direction with a first acceleration, causing the sample to flow upward along the second inclined portion 55b by Euler force until it enters a third reagent storage area 500c. As shown in Fig. 7(V), the position of the third reagent storage area 500c on the second inclined portion 55b corresponds to the position of the second reagent storage area 500b on the first inclined portion 55a. Therefore, the acceleration implemented in this step is the same as in Step (S04). Step (S08): After the sample enters the third reagent storage area 500c, it reacts with the third reagent 4c. Subsequently, in Step (S09), the power module 20 continues centrifugation to return the sample to the first reagent storage area 500a and then stops rotation. As shown in Fig. 7(VI), the liquid is now the mixture 4a'/4b'/4c'.

Step (S10): The power module 20 rotates to the rotation speed described in Step (S02) and then rapidly changes the rotation direction with a second acceleration, causing the sample to flow upward along the first inclined portion 55a until it enters a fourth reagent storage area 500d. As shown in Fig. 7(VII), the mixture flows with a second acceleration greater than the first acceleration, resulting in a longer path length than shown in Figs. 7(III) and 7(V). Step (S11): After the sample enters the fourth reagent storage area 500d, it reacts with the fourth reagent 4d. Subsequently, in Step (S12), the power module 20 continues centrifugation to return the sample to the first reagent storage area 500a and then stops rotation. As shown in Fig. 7(VIII), the liquid is now the mixture 4a'/4b'/4c'/4d'.

Step (S13): The power module 20 rotates to the rotation speed described in Step (S02) and then rapidly changes the rotation direction with a second acceleration, causing the sample to flow upward along the second inclined portion 55b until it enters a fifth reagent storage area 500e. As shown in Fig. 7(IX), the mixture flows with a second acceleration greater than the first acceleration. Step (S14): After the sample enters the fifth reagent storage area 500e, it reacts with the fifth reagent 4e. Finally, in Step (S15), the power module 20 continues centrifugation to return the sample to the first reagent storage area 500a. At this step, as shown in Fig. 7(X), the liquid is the mixture 4a/4b/4c/4d/4e of the sample reacted with the five reagents.

In summary, the aforementioned embodiments of the operating method for the centrifugal multi-stage reaction device 1 can classify the entire flow into five major processes: the first reagent 4a reaction process from Step (S02) to (S03), the second reagent reaction process from Step (S04) to (S06), the third reagent reaction process from Step (S07) to (S09), the fourth reagent reaction process from Step (S10) to (S12), and the fifth reagent reaction process from Step (S13) to (S15). Overall, each reagent reaction process comprises three main actions: "acceleration," "liquid flow to the destination reagent storage area for reaction," and "rotation to return the liquid to the first reagent storage area 500a." Given that a feature of the disclosed invention is performing reactions with different reagents 4 within the same reaction chamber 5, the entire flow can be classified into different stages of reagent 4 reaction processes based on the number or location of storage areas 500 and inclined portions 55. Since each reagent reaction process ends by returning to the first reagent 4a storage area, the reaction sequence can be adjusted according to the purpose of use. Furthermore, if a previous reaction was incomplete, the user can adjust the centrifugal direction and acceleration to control the disk to vibrate back and forth, ensuring complete reaction.

Therefore, in the steps (S01)-(S15) of the aforementioned embodiment, after the second reagent reaction process (Step (S06)) is completed, the fourth reagent reaction process (Steps (S10)-(S12)) can be performed first, followed by the third (Steps (S07)-(S09)) and finally the fifth reagent reaction process (Steps (S13)-(S15)). Alternatively, after the third reagent reaction process (Step (S09)) is completed, the fifth reagent reaction process can be performed first, followed by the fourth reagent reaction process.

In summary, the centrifugal multi-stage reaction device 1 of the disclosed invention differs from the prior art in that multiple reaction chambers 5 are typically connected or connected in series to the main flow channel in an independent reaction chamber 5 manner, so that the sample flows through the main flow channel and flows into each independent reagent vessel 5 in a fixed reaction order. Since the overall reaction process order cannot be freely adjusted, the reagents 4 in each stage of the reaction must be injected in advance according to the reaction order with the sample, or there is a possibility that the reaction reagent 4 has not completely reacted and cannot be back flowed for another reaction. To address the aforementioned difficulties, the centrifugal multi-stage reaction device 1 of the disclosed invention improves upon the problems of the prior art, enabling multiple reagent storage area 500 to be set simultaneously within a single reaction chamber 5, and the reaction sequence of these reagent 4 may be adjusted in a timely manner. If one of the reagent 4 does not react completely, it may be adjusted in a timely manner through multiple centrifugations, reactions or speed changes.

The above are merely preferred embodiments of the disclosed invention and should not limit the scope of implementation. Simple variations and modifications made according to the claims and specification of the disclosed invention still fall within its scope.

## Claims

1. A centrifugal multi-stage reaction device, comprising:
a reaction chamber;
wherein the reaction chamber comprises:
at least one inclined portion;
at least one reagent storage area, configured on the at least one inclined
portion and stored a reagent; and
an inlet flow channel, connected to the reaction chamber.

2. The centrifugal multi-stage reaction device as claimed in claim **1**, wherein the reaction chamber includes a triangular chamber, an elongated channel, a U-shaped flow channel or the combinations thereof.

3. The centrifugal multi-stage reaction device as claimed in claim **1**, wherein the reaction chamber includes a plurality of reagent storage area, and the plurality of reagent storage area are configured on the at least one inclined portion with arrangement of certain interval.

4. The centrifugal multi-stage reaction device as claimed in claim **3**, wherein the reaction chamber includes a first reagent storage area and a second reagent storage area, the first reagent storage area is configured at bottom of the at least one inclined portion and the second reagent storage area is configures at opposite end of the at least one inclined portion.

5. The centrifugal multi-stage reaction device as claimed in claim **3**, wherein the reaction chamber includes a first reagent storage area, a second reagent storage area and a third reagent storage area, the first reagent storage area is configured at bottom of the at least one inclined portion, the third reagent storage area is configured at other end of the at least one inclined portion and the second reagent storage area is configured at center of the at least one inclined portion.

6. The centrifugal multi-stage reaction device as claimed in claim **1**, wherein the at least one inclined portion includes a first inclined portion and a second inclined portion, the first inclined portion and the second inclined portion connect at one end of each other, and a plurality of reagent storage area are configured on the first inclined portion and the second inclined portion at certain interval.

7. The centrifugal multi-stage reaction device as claimed in claim **6**, wherein the at least one reagent storage area includes five reagent storage areas, the at least one reagent storage area includes a first reagent storage area, a second reagent storage area, a third reagent storage area, a fourth reagent storage area and a fifth reagent storage area, the first reagent storage area configures on the bottom end of the connection of the first inclined portion and the second inclined portion; the second reagent storage area configures on the center of the first inclined portion; the third reagent storage area configures on the center of the second inclined portion; the fourth reagent storage area configures on the other end of the first inclined portion; and the fifth reagent storage area configures on the other end of the second inclined portion.

8. The centrifugal multi-stage reaction device as claimed in claim **1**, wherein the reagent includes lyophilized reagent, evaporated reagent, lyophilized reagent sphere or the combinations thereof.

9. A centrifugal multi-stage reaction device operating method, comprising:
(A) providing the centrifugal multi-stage reaction device as claimed in claim 4;
(B) centrifuging via a power module to propel a sample from an inlet flow channel into a reaction chamber;
(C) the sample reacting with a first reagent in the first reagent storage area after the sample entering a first reagent storage area;
(D) rapidly changing rotation direction via the power module to propel the sample to flow upward along at least one inclined portion until it enters a second reagent storage area;
(E) the sample reacting with a second reagent in the second reagent storage area after the sample entering the second reagent storage area; and
(F) the power module continuing centrifugation to return the sample to the first reagent storage area.

10. A centrifugal multi-stage reaction device operating method, comprising:
(a) providing the centrifugal multi-stage reaction device as claimed in claim 5;
(b) centrifuging via a power module to reach a rotation speed, propelling a sample from an inlet flow channel into a reaction chamber;
(c) the sample reacting with a first reagent in the first reagent storage area after the sample entering a first reagent storage area;
(d) rapidly changing rotation direction via the power module to propel the sample to flow upward along at least one inclined portion until it enters a second reagent storage area;
(e) the sample reacting with a second reagent in the second reagent storage area after the sample entering the second reagent storage area;
(f) the power module continuing centrifugation to return the sample to the first reagent storage area and then stopping rotation;
(g) rotating via the power module to reach the rotation speed and then rapidly changing rotation direction with a second acceleration to propel the sample to flow upward along the at least one inclined portion until it enters a third reagent storage area;
(h) the sample reacting with a third reagent in the third reagent storage area after the sample entering the third reagent storage area; and
(i) the power module continuing centrifugation to return the sample to the first reagent storage area.

11. A centrifugal multi-stage reaction device operating method, comprising:
(S01) providing the centrifugal multi-stage reaction device as claimed in claim 7;
(S02) centrifuging via a power module to reach a rotation speed, propelling a sample from an inlet flow channel into a reaction chamber;
(S03) the sample reacting with a first reagent in the first reagent storage area after the sample entering a first reagent storage area;
(S04) rapidly changing rotation direction via the power module with a first acceleration to propel the sample to flow upward along a first inclined portion until it enters a second reagent storage area;
(S05) the sample reacting with a second reagent in the second reagent storage area after the sample entering the second reagent storage area;
(S06) the power module continuing centrifugation to return the sample to the first reagent storage area and then stopping rotation;
(S07) rapidly changing rotation direction via the power module with a first acceleration to propel the sample to flow upward along a second inclined portion until it enters a third reagent storage area;
(S08) the sample reacting with a third reagent in the third reagent storage area after the sample entering the third reagent storage area;
(S09) the power module continuing centrifugation to return the sample to the first reagent storage area and then stopping rotation;
(S10) rotating via the power module to reach the rotation speed and then rapidly changing rotation direction with a second acceleration to propel the sample to flow upward along the first inclined portion until it enters a fourth reagent storage area;
(S11) the sample reacting with a fourth reagent in the fourth reagent storage area after the sample entering the fourth reagent storage area;
(S12) the power module continuing centrifugation to return the sample to the first reagent storage area and then stopping rotation;
(S13) rotating via the power module to reach the rotation speed and then rapidly changing rotation direction with a second acceleration to propel the sample to flow upward along the second inclined portion until it enters a fifth reagent storage area;
(S14) the sample reacting with a fifth reagent in the fifth reagent storage area after the sample entering the fifth reagent storage area;
(S15) the power module continuing centrifugation to return the sample to the first reagent storage area.

12. The centrifugal multi-stage reaction device operating method as claimed in claim **11**, wherein Step (S02) to Step (S03) comprise a first reagent reaction process, Step (S04) to Step (S06) comprise a second reagent reaction process, Step (S07) to Step (S09) comprise a third reagent reaction process, Step (S10) to Step (S12) comprise a fourth reagent reaction process, and Step (S13) to Step (S15) comprise a fifth reagent reaction process.

13. The centrifugal multi-stage reaction device operating method as claimed in claim **12**, wherein the fourth reagent reaction process is selected to be performed first, followed by the third reagent reaction process, and finally the fifth reagent reaction process is completed after the second reagent reaction process is completed.

14. The centrifugal multi-stage reaction device operating method as claimed in claim **12**, wherein the fifth reagent reaction process is selected to be performed first, followed by the fourth reagent reaction process after the third reagent reaction process is completed.
